# EUROPEAN PATENT APPLICATION

(11) **EP 4 593 137 A1**
(43) Date of publication of application: **30.07.2025**
(21) Application number: 24217935.6
(22) Date of filing: 06.12.2024
(51) Int. Cl.: H01M 10/04, H01M 50/107, H01M 50/152, H01M 50/159, H01M 50/167, H01M 50/171, H01M 50/342, H01M 50/533, H01M 50/559

(54) **CYLINDRICAL SECONDARY BATTERY**

(30) Priority: 23.01.2024 KR 20240009941
(71) Applicant: Samsung SDI Co., Ltd., Gyeonggi-do 17084 (KR)
(72) Inventor: Yu, Gwan Hyeon, Yongin-si, Gyeonggi-do 17084 (KR); Jung, Hyun Ki, Yongin-si, Gyeonggi-do 17084 (KR); Kim, Myung Seob, Yongin-si, Gyeonggi-do 17084 (KR); Yoo, Yoon Sun, Yongin-si, Gyeonggi-do 17084 (KR); Jun, Woo Tae, Yongin-si, Gyeonggi-do 17084 (KR); Park, Gun Gue, Yongin-si, Gyeonggi-do 17084 (KR); Ko, Sung Gwi, Yongin-si, Gyeonggi-do 17084 (KR); Kim, Mun Sung, Yongin-si, Gyeonggi-do 17084 (KR); Lee, Dong Sub, Yongin-si, Gyeonggi-do 17084 (KR)
(74) Representative: Gulde & Partner

(57) **Abstract**

A cylindrical secondary battery includes an electrode assembly including a first electrode plate, a separator, and a second electrode plate; a case accommodating the electrode assembly and electrically connected to the second electrode plate; a terminal electrically connected to the first electrode plate and coupled to the case via a first gasket; a cap plate configured to seal an upper end portion of the case, a second gasket between the case and the cap plate; a first current collector between a lower surface of the electrode assembly and the terminal; and a second current collector between an upper surface of the electrode assembly and the cap plate and at one side of an edge region thereof between the case and the second gasket. An electrically conductive connection induction portion is on at least one of the cap plate or the second current collector.

## Description

### BACKGROUND

### 1. Field

Aspects of embodiments of the present disclosure relate to a cylindrical secondary battery.

### 2. Description of the Related Art

In general, a cylindrical secondary battery includes a cylindrical electrode assembly, a cylindrical case accommodating the electrode assembly and an electrolyte, and a cap assembly coupled to an opening of an upper end of the case. The cap assembly seals the case and is electrically connected to the electrode assembly to electrically connect an external device to the electrode assembly.

The cylindrical secondary battery generally has a structure in which a case having negative polarity and a cap assembly having positive polarity are insulated from each other by a gasket. In a battery module including a plurality of cylindrical secondary batteries connected to each other, bus bars need to be connected to upper and lower portions of the secondary batteries, thus making the structure of the battery module complicated and increasing a manufacturing/assembly time.

Additionally, because the components of the cap assembly are insulated by the gasket, the cap plate typically has a non-polar structure. Accordingly, if the material of the cap plate is steel, Ni-plated steel, Ni, or Cu, galvanic corrosion may occur due to long-term exposure to an electrolyte. Therefore, it is desirable to develop a structure that ensures electrical connection in order to make the cap plate have a negative (-) polarity structure.

The above-described information disclosed in the technology that serves as the background of the present disclosure is only for improving understanding of the background of the present disclosure and thus may include information that does not constitute the related art.

### SUMMARY

Embodiments of the present disclosure provide a cylindrical secondary battery including a cap plate having negative polarity.

A cylindrical secondary battery according to an embodiment includes an electrode assembly including a first electrode plate, a separator, and a second electrode plate, a cylindrical case accommodating the electrode assembly, having an open upper end portion, and electrically connected to the second electrode plate, a terminal electrically connected to the first electrode plate through a lower surface of the case and coupled to the case via a first gasket, a cap plate configured to seal the upper end portion of the case, a second gasket between the case and the cap plate and configured to seal and insulate between the case and the cap plate, a first current collector between a lower surface of the electrode assembly and the terminal, and a second current collector located between an upper surface of the electrode assembly and the cap plate and an edge region of the second current collector being between the case and the second gasket. An electrically conductive connection induction portion is on at least one of the cap plate and the second current collector.

The case may include a crimping portion at an upper end of the case and extending inwardly at a position above the cap plate to fix the cap plate, and a beading portion depressed in the case at a position below the cap plate. An upper end of the second gasket may be between the cap plate and the crimping portion and a lower end of the second gasket may be between the cap plate and the beading portion.

The cap plate may include a central area, a peripheral area between the crimping portion and the beading portion, and a connection area interconnecting the central area and the peripheral area and formed concavely in an outward direction of the case with respect to the central area and the peripheral area.

The case may include a trimming portion at an end of the crimping portion that is bent toward and contacts the cap plate.

The trimming portion may protrude farther toward a center of the cap plate than a tip of the upper end of the second gasket.

The trimming portion may be in contact with one side of the peripheral area of the cap plate.

The crimping portion may surround the second gasket to prevent the second gasket from being exposed to the outside.

The second gasket may have a circular ring shape having open upper and lower portions, and the upper end of the second gasket may be between an outer surface of an end of the cap plate and an inner surface of the crimping portion.

The tip of the upper end of the second gasket may protrude farther toward the center of the cap plate than the crimping portion.

A lower end portion of the first electrode plate may include a positive electrode uncoated portion having no positive electrode active material coated thereon, and an upper end portion of the second electrode plate may include a negative electrode uncoated portion having no negative electrode active material coated thereon.

The second current collector may have a circular plate shape corresponding to the upper surface of the electrode assembly and may be in contact with and electrically connected to the second electrode plate exposed to the upper surface of the electrode assembly.

The second current collector may include a flat portion in contact with the upper surface of the electrode assembly and an extension portion extending upward from one side of the flat portion, the flat portion may include a circular first flat portion and a second flat portion extending outward from the first flat portion, and the second flat portion and the extension portion may be arranged along the circumference of the second current collector.

The extension portion of the second current collector may be between the second gasket and the beading portion.

The electrically conductive connection induction portion may include a first electrically conductive connection induction portion on one side of the second current collector protruding toward the cap plate, and the first electrically conductive connection induction portion may be in contact with one side of a lower surface of the cap plate.

The first electrically conductive connection induction portion may include at least two electrically conductive connection induction portions arranged and spaced apart from each other along the circumference of the second current collector.

The first electrically conductive connection induction portion may protrude from an upper surface of the extension portion of the second current collector toward the cap plate.

The first electrically conductive connection induction portion may be an edge of the second current collector protruding toward the cap plate.

The first electrically conductive connection induction portion may be between the second flat portion and the extension portion of the second current collector.

The first electrically conductive connection induction portion may protrude upward and may gradually increase in width in a direction approaching the cap plate.

The first electrically conductive connection induction portion may have a bridge shape curved toward the cap plate.

The first electrically conductive connection induction portion may be on the extension portion of the second current collector.

The second flat portion of the second current collector may gradually increase in width in a direction from a center of the second current collector toward an edge of the second current collector.

The electrically conductive connection induction portion may include a second electrically conductive connection induction portion formed on one side of the cap plate protruding toward the second current collector, and the second electrically conductive connection induction portion may be in contact with one side of an upper surface of the second current collector.

The second electrically conductive connection induction portion may be on a lower surface of the connection area of the cap plate.

The second electrically conductive connection induction portion may have a circular ring shape extending continuously on a lower surface of the cap plate and along a circumference of the cap plate.

The second electrically conductive connection induction portion may include a plurality of protrusions, and the plurality of protrusions may be on a lower surface of the cap plate and spaced apart at substantially regular intervals along a circumference of the cap plate.

The electrically conductive connection induction portion may include a first electrically conductive connection induction portion on one side of the second current collector protruding toward the cap plate and a second electrically conductive connection induction portion on one side of the cap plate protruding toward the second current collector, and the first electrically conductive connection induction portion and the second electrically conductive connection induction portion may be in contact with each other.

The first electrically conductive connection induction portion may include at least two electrically conductive connection induction portions arranged and spaced apart from each other along the circumference of the second current collector, the protrusion of the second electrically conductive connection induction portion may have a circular ring shape extending continuously on a lower surface of the cap plate and along a circumference of the cap plate, and the first electrically conductive connection induction portion may be in contact with one side of the second electrically conductive connection induction portion.

The first electrically conductive connection induction portion may include at least two electrically conductive connection induction portions arranged and spaced apart from each other along the circumference of the second current collector, the second electrically conductive connection induction portion may include a number of protrusions, and the protrusions may be on a lower surface of the cap plate and spaced apart from each other at substantially regular intervals along a circumference of the cap plate. One side of the first electrically conductive connection induction portion and one side of the second electrically conductive connection induction portion may be in contact with each other.

The positions of the second electrically conductive connection induction portion and the first electrically conductive connection induction portion may correspond to each other.

The widths of the second electrically conductive connection induction portion and the first electrically conductive connection induction portion may correspond to each other.

The second electrically conductive connection induction portion and the first electrically conductive connection induction portion may be misaligned from each other.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view showing a cylindrical secondary battery according to an embodiment;
FIG. 2 is a cross-sectional view of the cylindrical secondary battery shown in FIG. 1;
FIG. 3 is an enlarged cross-sectional view of an upper end portion (portion A in FIG. 2) of a cylindrical secondary battery according to an embodiment;
FIGs. 4A to 4D are perspective and cross-sectional views showing electrical contact between a cap plate and a negative electrode current collector due to concave-convex structures according to various embodiments;
FIGs. 5A to 5C are perspective and cross-sectional views showing electrical contact between the cap plate and the negative electrode current collector due to bridge structures according to various embodiments; and
FIGs. 6A and 6B are perspective and cross-sectional views showing electrical contact between the cap plate and the negative electrode current collector due to protruding structures according to various embodiments.

### DETAILED DESCRIPTION

Hereinafter, embodiments will be described in detail with reference to the accompanying drawings. Embodiments are provided to more fully illustrate the disclosure to a person having ordinary skill in the art, and the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description, and the same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups thereof.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

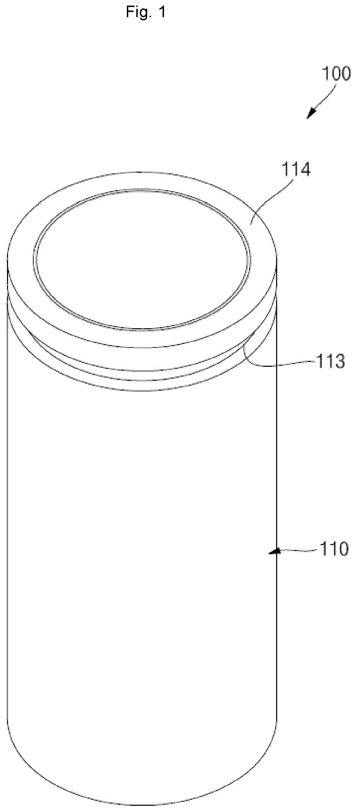

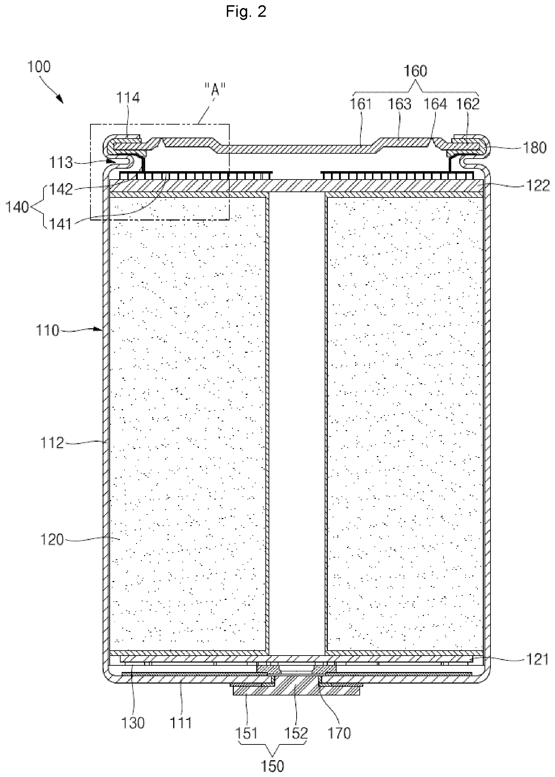

Hereinafter, a cylindrical secondary battery according to an embodiment will be described in detail with reference to the accompanying drawings (for convenience of description, in FIGs. 1 and 2, an upper side is defined as a side facing an upward direction, and a lower side is defined as a side facing a downward direction).

FIG. 1 is a perspective view showing a cylindrical secondary battery according to an embodiment, and FIG. 2 is a cross-sectional view of the cylindrical secondary battery shown in FIG. 1.

As shown in FIGs. 1 and 2, the cylindrical secondary battery 100 according to an embodiment may include a case 110, an electrode assembly 120 accommodated in the case 110, a terminal 150 coupled to a terminal hole in one end of the case 110, and a cap plate 160 configured to seal an opening in the other end of the case 110.

The case 110 may include a circular bottom surface portion 111 and a side portion 112 extending a length in the upward direction from an edge (e.g., a periphery) of the bottom surface portion 111. The upper end portion of the side portion 112 may be open. The bottom surface portion 111 and the side portion 112 of the case 110 may be integral.

The circular bottom surface portion 111 may be a flat circular plate and may have a terminal hole through a central portion thereof. The terminal 150 may be inserted into the terminal hole to be coupled to the bottom surface portion 111. A first gasket 170 for sealing and electrical insulation may be between the terminal hole and the terminal 150. The first gasket 170 may block contact between the terminal 150 and the case 110 to electrically isolate the terminal 150 and the case 110 from each other. The terminal hole in the bottom surface portion 111 of the case 110 may be sealed by the first gasket 170. The first gasket 170 may be formed of a resin material, such as polyethylene (PE), polypropylene (PP), or polyethylene terephthalate (PET).

As described above, during a process of manufacturing the cylindrical secondary battery 100, because the upper end portion of the case 110 is open, the electrode assembly 120 may be inserted into the case 110 through the open upper end portion of the case 110 together with an electrolyte. After the electrolyte and the electrode assembly 120 are inserted into the case 110, the cap plate 160 may be coupled to the open upper end portion of the case 110 to seal the interior of the case 110. The electrolyte may be configured to allow lithium ions to move between a positive electrode plate and a negative electrode plate of the electrode assembly 120. The electrolyte may be a non-aqueous organic electrolyte that is a mixture of lithium salt and a high-purity organic solvent. Furthermore, the electrolyte may be a polymer using a polymer electrolyte or the electrolyte may be a solid electrolyte. However, the type of electrolyte is not limited thereto.

The case 110 may be or include steel, a steel alloy, aluminum, an aluminum alloy, or an equivalent thereto. However, the material of the case 110 is not limited thereto. The case 110 may include a beading portion 113 at a position below the cap plate 160 and that is depressed inwardly to prevent the electrode assembly 120 from being separated to the outside, and a crimping portion 114 at a position above the cap plate 160 and bent inwardly. The beading portion 113 may be formed in the case 110 after the electrode assembly 120 is inserted into the case 110 through the open upper end portion of the case 110, thereby preventing the electrode assembly 120 from being separated from the case 110.

The beading portion 113 may be concave when viewed from the outside of the case 110. The beading portion 113 may be formed by pressing the side portion 112 of the case 110 in a direction toward the inside of the electrode assembly 120. In one or more embodiments, the beading portion 113 may protrude inwardly in a ring shape along the circumference of the side portion 112 of the case 110. The beading portion 113 may be configured to push and press a second gasket 180 in a direction from the outside of the case 110 toward the inside of the case 110 (i.e., a direction toward a winding center of the electrode assembly), thereby enhancing sealing of the cylindrical secondary battery 100 by the second gasket 180. The beading portion 113 may be formed at a portion of the case 110 that is capable of contacting the second gasket 180.

The case 110 may be or include steel, a steel alloy, nickel-plated steel, a nickel-plated steel alloy, aluminum, an aluminum alloy, or an equivalent thereto. However, the material of the case 110 is not limited thereto. The beading portion 113 may be on the inner circumferential surface of the side portion 112 and adjacent to the open upper end portion of the case 110, and the beading portion 113 may protrude in a direction toward the winding center of the electrode assembly 120. In one embodiment, the cap plate 160 may be seated on and primarily supported by the beading portion 113, and the second gasket 180, which will be described later, may be in contact with and secondarily supported by a second current collector 140 such that the cap plate 160 may be stably supported.

The electrode assembly 120 may include a first electrode plate 121, a second electrode plate 122, and a separator between the first and second electrode plates 121, 122. After the first electrode plate 121, the second electrode plate 122, and the separator are stacked, the electrode assembly 120 may be wound from a winding leading end to have a substantially cylindrical shape. The first electrode plate 121 may be a positive electrode plate, and the second electrode plate 122 may be a negative electrode plate. In other embodiments, the first electrode plate 121 may be a negative electrode plate, and the second electrode plate 122 may be a positive electrode plate. Hereinafter, for convenience of description, an embodiment in which the first electrode plate 121 is a positive electrode plate and the second electrode plate 122 is a negative electrode plate will be described.

The first electrode plate 121 may have a positive electrode active material, such as a transition metal oxide, coated on at least one surface of a plate-shaped metal foil made of aluminum (Al). The lower end portion of the first electrode plate 121 may include a positive electrode uncoated portion on which the positive electrode active material is not coated. The positive electrode uncoated portion may protrude downward from the electrode assembly 120.

The second electrode plate 122 may have a negative electrode active material, such as graphite or carbon, coated on at least one surface of a plate-shaped metal foil made of copper (Cu) or nickel (Ni). The upper end portion of the second electrode plate 122 may include a negative electrode uncoated portion on which the negative electrode active material is not coated. The negative electrode uncoated portion may protrude upward from the electrode assembly 120. The second electrode plate 122 may be electrically connected to the case 110.

The separator may be made of polyethylene (PE) or polypropylene (PP). However, the embodiments are not limited thereto. The separator may be configured to prevent electrical short circuit between the first electrode plate 121 and the second electrode plate 122 and to allow lithium ions to move therebetween.

The first current collector 130 may be a circular metal plate shaped corresponding to the lower surface of the electrode assembly 120. The planar size of the first current collector 130 may be equal to or smaller than the size of the lower surface of the electrode assembly 120. The first current collector 130 may be or include aluminum (Al). The first current collector 130 may be fixed and electrically connected to the first electrode plate 121, which is exposed below the electrode assembly 120, by one or more welds in a state in which the upper surface of the first current collector 130 is in contact with the lower surface of the electrode assembly 120. The first current collector 130 may be fixed and electrically connected to the terminal 150 by one or more welds in a state in which the lower surface of the first current collector 130 is in contact with the upper surface of the terminal 150. The first current collector 130 may be between the lower surface of the electrode assembly 120 and the terminal 150 and may be configured to act as a passage for flow of current between the first electrode plate 121 of the electrode assembly 120 and the terminal 150.

The second current collector 140 may have a circular plate shape corresponding to the upper surface of the electrode assembly 120, and may be in contact with and electrically connected to the second electrode plate 122 exposed above the upper surface of the electrode assembly 120.

The second current collector 140 may include a flat portion 141 that is in contact with the upper surface of the electrode assembly 120 and an extension portion 142 extending upward from one side of the edge of the flat portion 141. In an embodiment, the flat portion 141 may be circular. The lower surface of the flat portion 141 may be in contact with the upper surface of the electrode assembly 120. The flat portion 141 may be fixed and electrically connected to the second electrode plate 122, which is exposed above the electrode assembly 120, by welding in a state in which the lower surface of the flat portion 141 is in contact with the upper surface of the electrode assembly 120.

The extension portion 142 may extend upward from one side of the edge of the flat portion 141. The extension portion 142 may be in contact with and coupled to the beading portion 113 of the case 110. In one embodiment, the extension portion 142 may be coupled to the beading portion 113 of the case 110 by one or more welds in a state of being in contact with the inner surface of the beading portion 113 of the case 110. A plurality of extension portions 142 may be spaced apart from each other along one side of the edge of the flat portion 141. In an embodiment, the flat portion 141 may include a circular first flat portion and a second flat portion extending outward from the first flat portion. In one embodiment, the second flat portion of the flat portion 141 and the extension portions 142 may be alternately arranged along the circumference of the second current collector 140.

The second current collector 140 may be located between the upper surface of the electrode assembly 120 and the cap plate 160, and one side of the extension portion 142 may be on the beading portion 113 of the case 110. The second current collector 140 may be configured to act as a passage for flow of current between the second electrode plate 122 of the electrode assembly 120 and the case 110. In one or more embodiments, the case 110 may be a negative electrode terminal.

In one embodiment, the second current collector 140 may be formed in various other structures, and a detailed description thereof will be provided hereinafter.

The terminal 150 may be inserted into the terminal hole formed in the bottom surface portion 111 of the case 110 to be electrically connected to the first current collector 130. In one or more embodiments, the terminal 150 may be a positive electrode terminal. The terminal 150 and the case 110 may have different polarities. The terminal 150 may be made of a material identical or similar to that of the first current collector 130 or the first electrode plate 121. A diameter of a portion of the terminal 150 exposed below (i.e., outside) the case 110 and a diameter of a portion of the terminal 150 located in the case 110 may be larger than a diameter of a portion of the terminal 150 located in the terminal hole.

The terminal 150 may include a head 151, which is a portion exposed below (i.e., outside) the case 110, and a fastening portion 152, which is a portion located in the case 110 and facing the electrode assembly 120. The terminal 150 may be coupled to the terminal hole in the case 110 in a direction from the outside to the inside. The head 151 may be located outside the case 110. The fastening portion 152 may be compression-deformed (compression-molded) by riveting and thus may be compressed on the upper portion of the bottom surface portion 111 with the first gasket 170 between the terminal 150 and the bottom surface portion 111. The fastening portion 152 may have a diameter gradually increasing in a direction from the terminal hole toward the inside of the case 110. The head 151 may be in close contact with the lower portion of the bottom surface portion 111 with the first gasket 170 between the head 151 and the bottom surface portion 111. In one or more embodiments, because the first gasket 170 is between the terminal 150 and the terminal hole, the first gasket 170 may electrically insulate the terminal 150 and the case 110 from each other and may seal therebetween. The terminal 150 may be electrically connected to the first electrode plate 121 of the electrode assembly 120 via the first current collector 130.

The cap plate 160 may be a circular metal plate and may be coupled to the upper end portion of the case 110. The upper surface of the cap plate 160 may be exposed to the outside. The cap plate 160 may be coupled to the upper end portion of the case 110 the second gasket 180 may be between the cap plate 160 and the case 110 and thus the cap plate 160 may be prevented from being electrically connected to the case 110. The cap plate 160 is not electrically connected to the positive electrode or the negative electrode of the electrode assembly 120 and thus may not have any separate electrical polarity. The cap plate 160 may be or include aluminum, an aluminum alloy, or an equivalent thereto. The cap plate 160 may be a metal plate and may have a thickness in a range from approximately 0.7 mm to approximately 1.2 mm.

The cap plate 160 may include a central area 161, a peripheral area 162 between the crimping portion 114 and the beading portion 113, and a connection area 163 interconnecting the central area 161 and the peripheral area 162 and extending concavely in the outward direction of the case 110 with respect to the central area 161 and the peripheral area 162. The central area 161 may be an area within a radius from the center of the cap plate 160 and may be more concave toward the electrode assembly 120 than the peripheral area 162 or may be coplanar with the peripheral area 162.

The peripheral area 162 of the cap plate 160 may be fixed between the beading portion 113 and the crimping portion 114 of the case 110. In one or more embodiments, the cap plate 160 may be seated on the second gasket 180 in a state in which the second gasket 180 is on the beading portion 113 of the case 110. Thereafter, the crimping portion 114 of the case 110 may be bent in the inward direction of the cap plate 160 to press the second gasket 180, thereby coupling the cap plate 160 and the case 110 to each other. The second gasket 180 may be configured to press and seal between the case 110 and the cap plate 160 and may prevent the cap plate 160 from being separated from the case 110.

As described above, the cap plate 160 may include the central area 161, the connection area 163 extending outwardly from the central area 161, and the peripheral area 162 extending outwardly from the connection area 163 and having an end portion between the beading portion 113 and the crimping portion 114 of the case 110 so as to be coupled to the case 110. The connection area 163 may be located at a higher position than the central area 161 and the peripheral area 162. The peripheral area 162 may be located at a higher position than or at the same (or substantially the same) height as the central area 161.

In one or more embodiments, the cap plate 160 may include steps between the central area 161 and the connection area 163 and between the connection area 163 and the peripheral area 162. In one or more embodiments, a connection portion between the central area 161 and the connection area 163 and a connection portion between the connection area 163 and the peripheral area 162 may be inclined.

The cap plate 160 may be on the second gasket 180 in a state in which the second gasket 180 is on the second current collector 140. The upper end of the second gasket 180 and the upper end of the case 110 may be deformed together to surround the edge of the cap plate 160, thereby fixing the cap plate 160 to the case 110.

The cap plate 160 may include a vent portion 164 and thus may be configured to function as a vent in response to an internal pressure being generated. In one embodiment, the vent portion 164 may be a notch in the connection area 163 of the cap plate 160 that is configured to rupture in response to an internal pressure being generated. The notch may have a ring shape along the periphery of the cap plate 160. In one or more embodiments, the cap plate 160 may be configured to function as a current interrupt device (CID) that is deformed by internal pressure to block a current path or the cap plate 160 may be configured to function as a fuse that includes a portion designed to melt due to high temperature to block a current path.

The cap plate 160 may have a substantially circular plate shape and may not be in contact with the second current collector 140 or the negative electrode tab. The cap plate 160 may be configured such that the plate surface of the connection area 163 is located at a higher position than that of the peripheral area 162 fixed to the second gasket 180 and that of the central area 161 at the central portion thereof when viewed from the side. In one or more embodiments, the cap plate 160 may have a circular plate shape, the central portion of which protrudes upward.

FIGs. 1 and 2 show the cylindrical secondary battery 100 in which the cap plate 160 and the second gasket 180 are accommodated in the case 110 to seal the case 110.

The upper portion of the case 110 may be bent toward the center of the case 110 through a crimping process to be deformed into a structure surrounding the upper portion of the second gasket 180 and the outer circumferential surface of the cap plate 160. In one or more embodiments, after the cap plate 160 and the second gasket 180 are accommodated in the case 110, the second gasket 180 and the cap plate 160 may come into close contact with each other in a state in which the beading portion 113 and the crimping portion 114 are formed. In one or more embodiments, the lower end portion of the second gasket 180 may be between the beading portion 113 and the cap plate 160 and be configured to block contact between the beading portion 113 and the cap plate 160. In one or more embodiments, the extension portion 142 of the second current collector 140 may be between the second gasket 180 and the beading portion 113.

In one embodiment, the second gasket 180 may be between the case 110 and the cap plate 160 and cover the outer periphery of the cap plate 160. In one embodiment, the outer surface of the second gasket 180 may be in close contact with the beading portion 113 and the crimping portion 114 of the case 110, and the inner surface of the second gasket 180 may be in close contact with the outer periphery of the cap plate 160. In one or more embodiments, the second gasket 180 may seal and insulate the case 110 and the cap plate 160. The second gasket 180 may be assembled with the cap plate 160 and then may be assembled with the case 110 to form and maintain cell sealing. The side wall of the case 110 and the cap plate 160 may be sealed and insulated by the second gasket 180. In one embodiment, a separate upper insulating plate may not be provided, but a gasket integrated with an upper insulating plate may be used to insulate the electrode assembly 120 and the case 110 from each other (i.e., the gasket may function as an upper insulating plate).

The second gasket 180 may be a circular ring shape having open upper and lower portions. The upper end of the second gasket 180 may be between the outer surface of the end of the cap plate 160 and the inner surface of the crimping portion 114. In one or more embodiments, the tip of the upper end of the second gasket 180 may protrude farther toward the center of the cap plate 160 than the crimping portion 114.

In one embodiment, the second gasket 180 may be between the case 110 and the cap plate 160 and may electrically insulate the case 110 and the cap plate 160 from each other. In one or more embodiments, the cap plate 160 may be an electrically non-polar part. In the cylindrical secondary battery 100, because the terminal 150 is on one surface of the case 110, rather than the cap plate 160, both a negative electrode and a positive electrode may be provided on that surface. However, if the material of the cap plate 160 is steel, Ni-plated steel, Ni, or Cu, galvanic corrosion may occur due to long-term exposure to the electrolyte.

Therefore, in one embodiment, an electrically conductive connection induction structure may be provided to achieve electrical contact between the cap plate 160 and the second current collector 140. In one embodiment, the cap plate 160 may be induced to have a negative (-) polarity, thereby preventing corrosion. In one embodiment, an electrically conductive connection induction structure may be in at least one of the cap plate 160 and the second current collector 140.

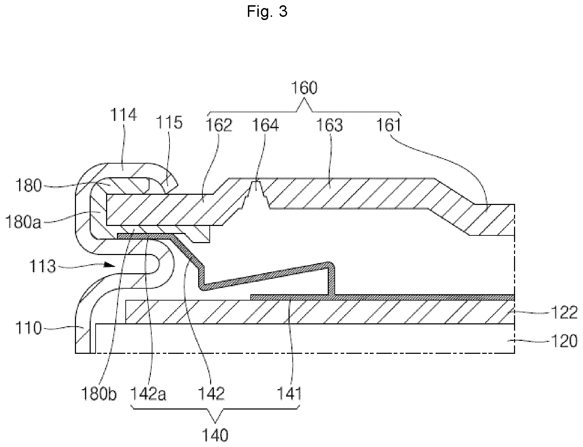

Hereinafter, a cylindrical secondary battery in which an electrically conductive connection induction structure is on the upper surface of the cap plate 160 will be described with reference to FIG. 3.

FIG. 3 is an enlarged cross-sectional view of an upper end portion (portion A in FIG. 2) of a cylindrical secondary battery according to an embodiment.

In one embodiment, as shown in FIG. 3, the upper end of the case 110 may be configured to contact the cap plate 160. A trimming portion 115 bent toward the cap plate 160 may be formed at the end of the crimping portion 114 so as to contact the cap plate 160. The trimming portion 115 may protrude farther toward the center of the cap plate 160 than the tip of the upper end of the second gasket 180. The trimming portion 115 may be in contact with one side of the peripheral area 162 of the cap plate 160. The crimping portion 114 may surround the second gasket 180 so that the second gasket 180 is not exposed to the outside. In one embodiment, a portion of the upper surface of the cap plate 160 that is in contact with the trimming portion 115 may be referred to as an electrically conductive connection induction portion.

The second gasket 180 may include a sidewall portion 180a that is in close contact with the inner surface of the side portion 112 of the case 110 and that has open upper and lower portions and a bottom portion 180b that extends inwardly perpendicular (or substantially perpendicular) to the sidewall portion 180a. The bottom portion 180b may have a circular plate shape and may be parallel (or substantially parallel) to the bottom surface portion 111 of the case 110 and the cap plate 160. The sidewall portion 180a of the second gasket 180 may be deformed inwardly together with the case 110 in a state of extending upward from the bottom portion 180b and surrounding the edge of the cap plate 160.

An assembly process of the second gasket 180 of the cylindrical secondary battery 100 will be described in more detail with reference to FIG. 3. In one embodiment, the second gasket 180 may be positioned on the electrode assembly 120 in a state in which the electrode assembly 120 is accommodated in the case 110. Thereafter, the cap plate 160 may be positioned on the second gasket 180. Subsequently, the upper end of the case 110 may be deformed in a direction from the outside toward the inside (i.e., a direction toward the winding center of the electrode assembly). The second gasket 180 may be deformed along with the case 110. Accordingly, the sidewall portion 180a of the second gasket 180 may come into close contact with the end portion of the cap plate 160, and the end portion of the cap plate 160 may be pressed and fixed by the sidewall portion 180a of the gasket 180 and the upper end of the side portion 112 of the case 110. The cap plate 160 may be fixed by the case 110 with the second gasket 180 between the cap plate 160 and the case 110.

In one embodiment, an upper end region of the sidewall portion 180a of the second gasket 180 may be located between an outer surface of the end of the cap plate 160 and an inner surface of the end region of the case 110. This upper end region may be referred to as a folded sidewall portion 180a of the second gasket 180. In one embodiment, the trimming portion 115 of the case 110 may protrude farther toward the winding center of the electrode assembly 120 than the upper end region of the sidewall portion 180a. In a state in which the second gasket 180 is inserted into the case 110, the height of the sidewall portion 180a of the second gasket 180 is lower than the height of the upper end of the side portion 112 of the case 110. Because the covering length of the case 110 is greater than the covering length of the second gasket 180, it may be possible to induce an electrically conductive connection between the cap plate 160 and the case 110.

In one embodiment, as described above, during manufacture of the cylindrical secondary battery 100, when the end region of the side portion 112 of the case 110 is bent after the cap plate 160 is accommodated in (inserted into) the case 110, the upper end region of the sidewall portion 180a of the second gasket 180 may also be bent, whereby the upper end region of the sidewall portion 180a of the second gasket 180 may cover the end of the cap plate 160. Because the upper end region of the sidewall portion 180a of the second gasket 180 is bent to extend inwardly, sealing performance may be improved and thus leakage of the electrolyte may be more reliably prevented or at least mitigated against.

The sidewall portion 180a may be between the inner surface of the case 110 and the side and upper surfaces of the cap plate 160. The sidewall portion 180a may be in close contact with the sidewall of the inner surface of the case 110. The bottom portion 180b of the second gasket 180 may be between the inner surface of the case 110 and the lower surface of the cap plate 160 and may be in contact with the extension portion 142 (or electrode tab). In one embodiment, although the sidewall portion 180a and the bottom portion 180b are illustrated as being integrally formed with each other, the sidewall portion 180a and the bottom portion 180b may be separately provided from each other. In one embodiment, because the second gasket 180 needs to be inserted into the case 110, a diameter of the bottom portion 180b may be smaller than the diameter of the case 110.

In one embodiment, the material of the second gasket 180 may be polypropylene-based resin (PP) or polybutylene terephthalate-based resin (PBT). However, the embodiments are not limited thereto. The material of the second gasket 180 may be polyolefin-based resin, polyester-based resin, or polyether-based resin. In one or more embodiments, the second gasket 180 may be coated with tar. The tar is configured to continuously protect the coating layer and to prevent the attachment of contaminants. Furthermore, the tar is configured to reduce the corrosion rate by suppressing peeling of the coating layer, and thus the durability may be maintained due to the excellent mechanical strength and physical properties.

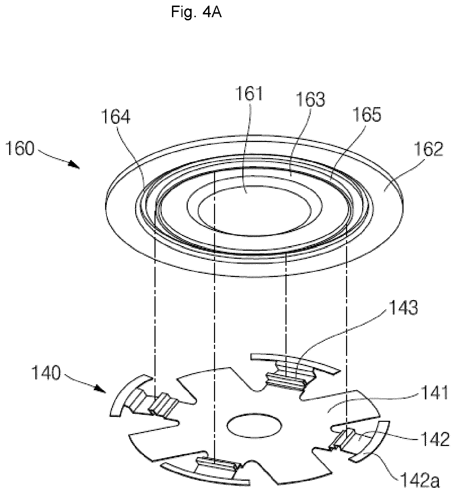

Hereinafter, an embodiment in which a first electrically conductive connection induction portion 143, 144, or 146 is at the second current collector 140, an embodiment in which a second electrically conductive connection induction portion 165 is at the cap plate 160, and an embodiment in which both the first electrically conductive connection induction portion 143, 144, or 146 and the second electrically conductive connection induction portion 165 are provided will be described with reference to FIGs. 4A to 6B. The tip of the upper end of the second gasket 180 may protrude farther toward the center of the cap plate 160 than the crimping portion 114.

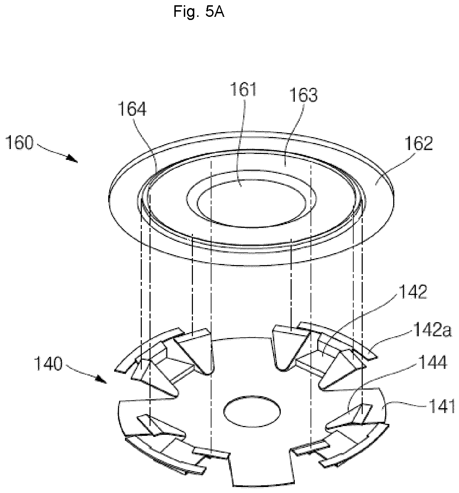

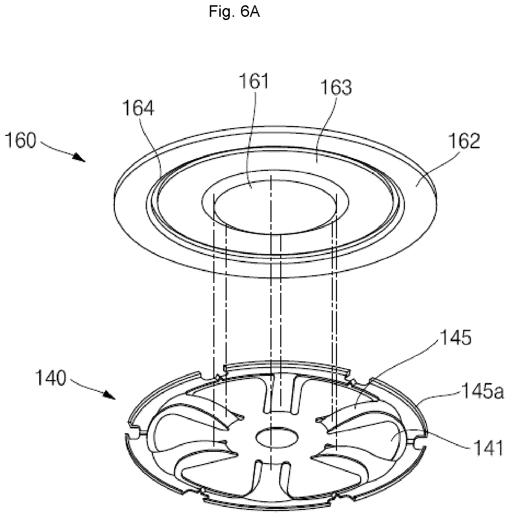

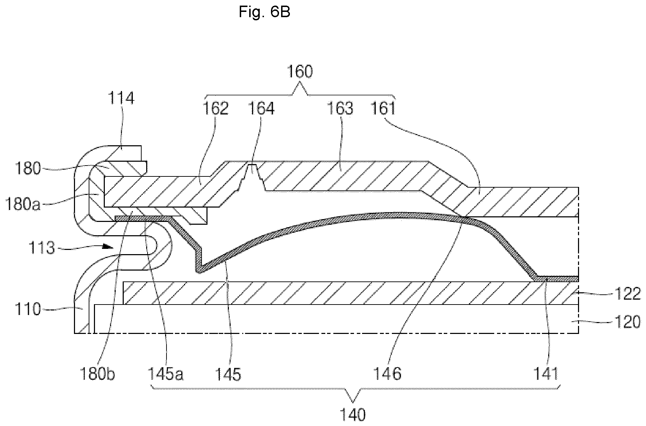

FIGs. 4A to 4D are perspective and cross-sectional views showing the electrical contact between the cap plate and the negative electrode current collector due to concave-convex structures according to various embodiments. FIGs. 5A to 5C are perspective and cross-sectional views showing electrical contact between the cap plate and the negative electrode current collector due to bridge structures according to various embodiments. FIGs. 6A and 6B are perspective and cross-sectional views showing electrical contact between the cap plate and the negative electrode current collector due to protruding structures according to various embodiments.

FIG. 4A is a perspective view showing the upper surface of the second current collector 140 including the first electrically conductive connection induction portion 143 and the lower surface of the cap plate 160 including the second electrically conductive connection induction portion 165 in a state before the second current collector 140 and the cap plate 160 are coupled to each other.

The first electrically conductive connection induction portion 143 may protrude from one side of the second current collector 140 toward the cap plate 160. In one embodiment, the first electrically conductive connection induction portion 143 may be on the extension portion 142 of the second current collector 140. The second electrically conductive connection induction portion 165 may be or include a protrusion on one side of the cap plate 160 extending toward the second current collector 140. In one embodiment, the second electrically conductive connection induction portion 165 may be on the connection area 163 of the cap plate 160. In an embodiment in which the second current collector 140 and the cap plate 160 are coupled to each other, the first electrically conductive connection induction portion 143 and the protrusion of the second electrically conductive connection induction portion 165 may come into contact with each other.

At least two first electrically conductive connection induction portions 143 may be arranged and spaced apart from each other along the planar circumference of the second current collector 140. The second electrically conductive connection induction portion 165 may have a circular ring shape in which the protrusion extends continuously on the lower surface of the cap plate 160 and along the circumference of the cap plate 160. The first electrically conductive connection induction portion 143 may be in contact with one side of the protrusion of the second electrically conductive connection induction portion 165.

However, the embodiments are not limited thereto. The second electrically conductive connection induction portion 165 may include a plurality of protrusions on the lower surface of the cap plate 160 and spaced apart from each other at regular (or substantially regular) intervals along the circumference of the cap plate 160. One side of the first electrically conductive connection induction portion 143 and the protrusion of the second electrically conductive connection induction portion 165 may be in contact with each other. In one embodiment, the protrusion of the second electrically conductive connection induction portion 165 and the protruding position of the first electrically conductive connection induction portion 143 may correspond to each other. In one or more embodiments, the width of the protrusion of the second electrically conductive connection induction portion 165 and the protruding width of the first electrically conductive connection induction portion 143 may correspond to each other (i.e., the widths may be the same or substantially the same). In other embodiments, the width of the protrusion of the second electrically conductive connection induction portion 165 and the protruding width of the first electrically conductive connection induction portion 143 may be different from each other. In one or more embodiments, one side of the protrusion of the second electrically conductive connection induction portion 165 and one side of the first electrically conductive connection induction portion 143 may be in contact with each other. In other embodiments, the protrusion of the second electrically conductive connection induction portion 165 and the first electrically conductive connection induction portion 143 may be coupled to each other in a state in which the protrusion of the second electrically conductive connection induction portion 165 and the protruding position of the first electrically conductive connection induction portion 143 do not correspond to each other and are misaligned (e.g., offset) from each other.

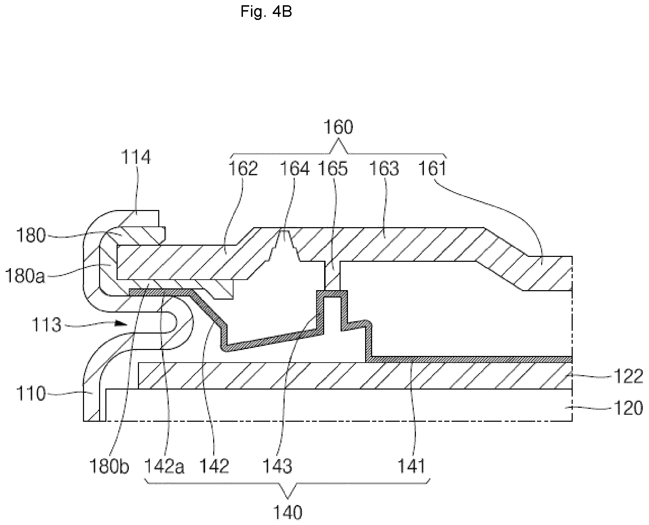

FIG. 4B is a cross-sectional view for explaining an electrically conductive connection induction structure including the first electrically conductive connection induction portion 143 having a concave-convex structure and the second electrically conductive connection induction portion 165. The first electrically conductive connection induction portion 143, which is on the extension portion 142, may be in contact with the second electrically conductive connection induction portion 165. An end 142a of the extension portion may be between the beading portion 113 and the second gasket 180.

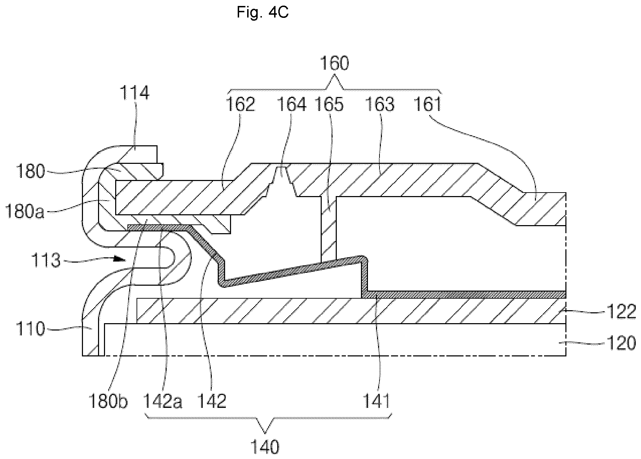

FIG. 4C is a cross-sectional view for explaining an electrically conductive connection induction structure including only the second electrically conductive connection induction portion 165 (i.e., not including the first electrically conductive connection induction portion 143). The second electrically conductive connection induction portion 165 may be in contact with one side of an upper surface of the second current collector 140. In an embodiment, the second electrically conductive connection induction portion 165 may be in contact with one side of the extension portion 142 of the second current collector 140. The length by which the protrusion of the second electrically conductive connection induction portion 165 protrudes toward the second current collector 140 may be greater than that in the embodiment including both the first electrically conductive connection induction portion 143 and the second electrically conductive connection induction portion 165.

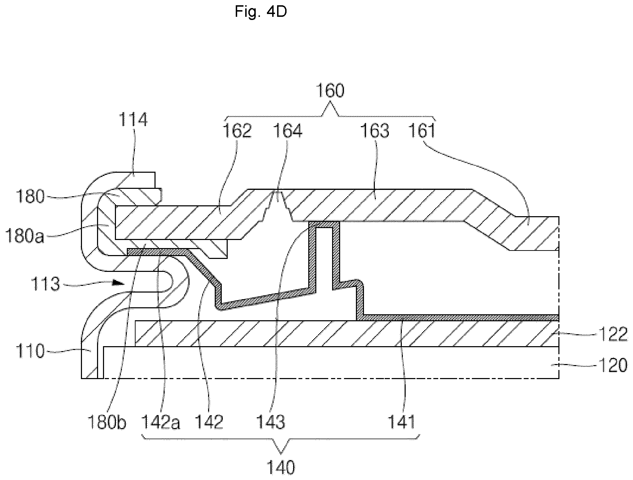

FIG. 4D is a cross-sectional view for explaining an electrically conductive connection induction structure including only the first electrically conductive connection induction portion 143 having a concave-convex structure (i.e., not including the second electrically conductive connection induction portion 165). The first electrically conductive connection induction portion 143 may be in contact with one side of the lower surface of the connection area 163 of the cap plate 160. The length by which the first electrically conductive connection induction portion 143 protrudes toward the cap plate 160 may be greater than that in the embodiment including both the first electrically conductive connection induction portion 143 and the second electrically conductive connection induction portion 165.

FIG. 5A is a perspective view showing the upper surface of the second current collector 140 including the first electrically conductive connection induction portion 144 having a shape (e.g., a fan shape) that gradually increases in width in the upward direction and the lower surface of the cap plate 160 in a state before the second current collector 140 and the cap plate 160 are coupled to each other.

The first electrically conductive connection induction portion 144 may protrude from one side of the second current collector 140 toward the cap plate 160. In one or more embodiments, the first electrically conductive connection induction portion 144 may be configured such that a portion of the edge of the second current collector 140 protrudes toward the cap plate 160. In an embodiment, the first electrically conductive connection induction portion 144 may be an edge of the second current collector 140 protruding toward the cap plate 160. In an embodiment in which the second current collector 140 and the cap plate 160 are coupled to each other, the first electrically conductive connection induction portion 144 and one side of the lower surface of the cap plate 160 may come into contact with each other.

The first electrically conductive connection induction portion 144 may be between the second flat portion of the flat portion 141 and the extension portion 142 of the second current collector 140. The first electrically conductive connection induction portion 144 may protrude upward from each of both sides of each of the extension portions 142. The first electrically conductive connection induction portion 144 may gradually increase in width in a direction approaching the cap plate 160.

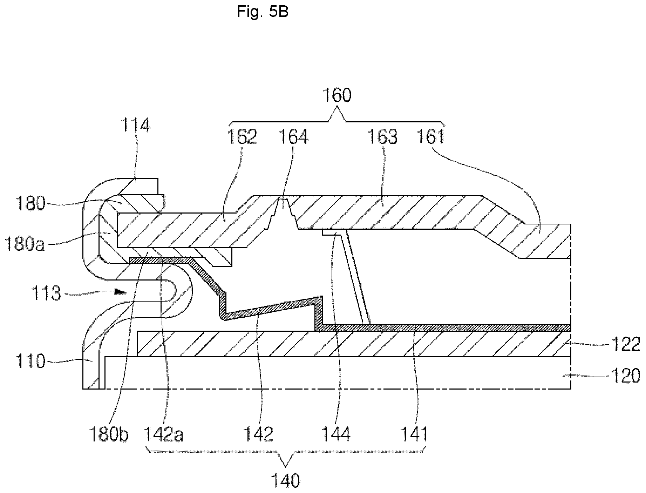

FIG. 5B is a cross-sectional view for explaining an electrically conductive connection induction structure including the first electrically conductive connection induction portion 144 configured to protrude upward from one side of the edge of the flat portion 141. The first electrically conductive connection induction portion 144, which is separate from the extension portion 142 at one side of the edge of the flat portion 141, may be in contact with the lower surface of the connection area 163 of the cap plate 160. An end 142a of the extension portion may be between the beading portion 113 and the second gasket 180.

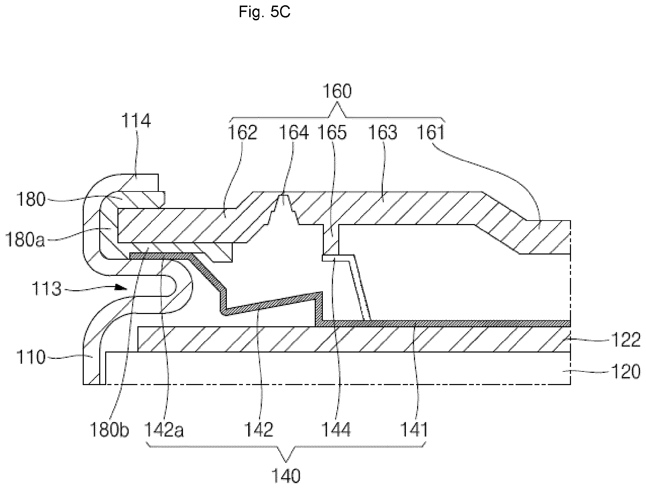

FIG. 5C is a cross-sectional view for explaining an electrically conductive connection induction structure including the first electrically conductive connection induction portion 144 configured to protrude upward from one side of the edge of the flat portion 141 and the second electrically conductive connection induction portion 165. The end of the first electrically conductive connection induction portion 144 may be in contact with the end of the protrusion of the second electrically conductive connection induction portion 165. The protruding length of the first electrically conductive connection induction portion 144 may be less than that in the embodiment including only the first electrically conductive connection induction portion 144 (refer to FIG. 4B).

FIG. 6A is a perspective view showing the upper surface of the second current collector 140 including the first electrically conductive connection induction portion 146 (refer to FIG. 6B) configured in the shape of a bridge having an upwardly protruding curved portion and the lower surface of the cap plate 160 in a state before the second current collector 140 and the cap plate 160 are coupled to each other. In an embodiment in which the second current collector 140 and the cap plate 160 are coupled to each other, the first electrically conductive connection induction portion 146 and one side of the lower surface of the cap plate 160 may come into contact with each other.

The first electrically conductive connection induction portion 146 may be on the extension portion 145 of the second current collector 140 and may have a bridge shape curved toward the cap plate 160. The second current collector 140 may include a plurality of first electrically conductive connection induction portions 146. As shown in FIG. 6A, the extension portion 145 may extend from one side of the flat portion 141 and may protrude upward. An end 145a of the extension portion may have a ring shape (i.e., an annular shape) extending continuously along the circumference of the second current collector 140. The second flat portion of the flat portion 141 of the second current collector 140 may gradually increase in width in a direction from the center of the second current collector 140 toward the edge thereof. The second flat portion of the flat portion 141 may be spaced apart from the extension portion 145, and the extension portion 145 may be between adjacent second flat portions of the flat portion 141. The second flat portion of the flat portion 141 and the extension portion 145 may extend radially outward with respect to the center of the second current collector 140 and may be alternately arranged in the circumferential direction. The first electrically conductive connection induction portion 146 may be the highest protruding portion in the bridge-shaped extension portion 145. The first electrically conductive connection induction portion 146 may be a portion of the extension portion 145 that is in contact with the cap plate 160.

FIG. 6B is a cross-sectional view for explaining an electrically conductive connection induction structure including the first electrically conductive connection induction portion 146 protruding from the extension portion 145 so as to be curved toward the cap plate 160. The first electrically conductive connection induction portion 146 may be in contact with one side of the cap plate 160. In one or more embodiments, the first electrically conductive connection induction portion 146 may be in contact with the lower surface of the central area 161 of the cap plate 160. An end 145a of the extension portion may be between the beading portion 113 and the second gasket 180.

In other embodiments, the second electrically conductive connection induction portion 165 may be a protrusion shape on the cap plate 160 or may include a protrusion on the cap plate 160, and the protrusion of the second electrically conductive connection induction portion 165 and the bridge-shaped first electrically conductive connection induction portion 146 may be in contact with each other. The second electrically conductive connection induction portion 165 may be on the central area 161, and the protrusion protruding from the central area 161 and the first electrically conductive connection induction portion 146 may be in contact with each other. However, the embodiments are not limited thereto. The protrusion of the second electrically conductive connection induction portion 165 may be on the connection area 163, and the protrusion of the connection area 163 and the first electrically conductive connection induction portion 146 may be in contact with each other.

As is apparent from the above description, according to the embodiments, in a case in which a cap plate is insulated from a case having negative polarity by a gasket, a structure capable of inducing the cap plate to have negative polarity may be employed, thereby preventing galvanic corrosion attributable to long-term exposure of the cap plate to an electrolyte.

According to the embodiments, electrically conductive connection may be induced by reducing the overall height of the gasket so that a trimming portion of a can and the cap plate come into contact with each other after crimping or so that the cap plate and a negative electrode current collector come into electrical contact with each other, thereby preventing corrosion of the cap plate and improving product quality.

The above-mentioned embodiment is merely an embodiment, and thus, the present disclosure is not limited to the foregoing embodiment, and also it will be understood by those of ordinary skill in the art that various changes in form and details may be made therein without departing from the scope of the present disclosure as defined by the following claims.

## Claims

1. A cylindrical secondary battery (100) comprising:
an electrode assembly (120) comprising a first electrode plate (121), a separator, and a second electrode plate (122);
a cylindrical case (110) accommodating the electrode assembly (120), the cylindrical case (110) comprising an open upper end portion, the cylindrical case (110) being electrically connected to the second electrode plate (122);
a terminal (150) electrically connected to the first electrode plate (121) through a lower surface of the cylindrical case (110) and coupled to the cylindrical case (110) via a first gasket (170);
a cap plate (160) configured to seal the open upper end portion of the cylindrical case (110);
a second gasket (180) between the cylindrical case (110) and the cap plate (160), the second gasket (180) sealing and insulating between the cylindrical case (110) and the cap plate (160);
a first current collector (130) between a lower surface of the electrode assembly (120) and the terminal (150); and
a second current collector (140) between an upper surface of the electrode assembly (120) and the cap plate (160), an edge region of the second current collector (140) being between the cylindrical case (110) and the second gasket (180),
wherein an electrically conductive connection induction portion is on at least one of the cap plate (160) and the second current collector (140).

2. The cylindrical secondary battery (100) as claimed in claim 1, wherein the cylindrical case (110) comprises:
a crimping portion (114) at an upper end of the cylindrical case (110) extending inwardly at a position above the cap plate (160), the crimping portion (114) being configured to fix the cap plate (160); and
a beading portion (113) depressed in the cylindrical case (110) at a position below the cap plate (160), and
wherein an upper end of the second gasket (180) is between the cap plate (160) and the crimping portion (114) and a lower end of the second gasket (180) is between the cap plate (160) and the beading portion (113).

3. The cylindrical secondary battery (100) as claimed in claim 2, wherein the cap plate (160) comprises:
a central area (161);
a peripheral area (162) between the crimping portion (114) and the beading portion (113); and
a connection area (163) interconnecting the central area (161) and the peripheral area (162), the connection area (163) being concave in an outward direction of the cylindrical case (110) with respect to the central area (161) and the peripheral area (162).

4. The cylindrical secondary battery (100) as claimed in claim 2 or 3, wherein the cylindrical case (110) comprises a trimming portion (115) at an end of the crimping portion (114), the trimming portion (115) being bent toward the cap plate (160) and contacting the cap plate (160), and/or
wherein the trimming portion (115) protrudes farther toward a center of the cap plate (160) than a tip of the upper end of the second gasket (180), and/or
wherein the trimming portion (115) is in contact with one side of the peripheral area (162) of the cap plate (160).

5. The cylindrical secondary battery (100) as claimed in any one of the preceding claims, wherein the crimping portion (114) surrounds the second gasket (180), the crimping portion (114) being configured to prevent the second gasket (180) from being exposed to an outside, and/or
wherein a tip of the upper end of the second gasket (180) protrudes farther toward a center of the cap plate (160) than the crimping portion (114), and/or
wherein the second gasket (180) has a circular ring shape having open upper and lower portions, and the upper end of the second gasket (180) is between an outer surface of an end of the cap plate (160) and an inner surface of the crimping portion (114).

6. The cylindrical secondary battery (100) as claimed in any one of the preceding claims, wherein a lower end portion of the first electrode plate (121) comprises:
a positive electrode uncoated portion having no positive electrode active material coated thereon; and
an upper end portion of the second electrode plate (122) comprises a negative electrode uncoated portion having no negative electrode active material coated thereon,
wherein the second current collector (140) has a circular plate shape corresponding to the upper surface of the electrode assembly (120), and wherein the second current collector (140) is in contact with and electrically connected to the second electrode plate (122) exposed to the upper surface of the electrode assembly (120).

7. The cylindrical secondary battery (100) as claimed in any one of the preceding claims, wherein the second current collector (140) comprises:
a flat portion (141) in contact with the upper surface of the electrode assembly (120); and
an extension portion (142, 145) extending upward from one side of the flat portion (141), and
wherein the flat portion (141) includes a circular first flat portion and a second flat portion extending outward from the first flat portion, the second flat portion and the extension portion (142, 145) are arranged along a circumference of the second current collector (140), and/or
wherein the extension portion (142, 145) of the second current collector (140) is between the second gasket (180) and the beading portion (113).

8. The cylindrical secondary battery (100) as claimed in claim 7, wherein the electrically conductive connection induction portion comprises a first electrically conductive connection induction portion (143, 144, 146) formed on one side of the second current collector (140) protruding toward the cap plate (160), and
wherein the first electrically conductive connection induction portion (143, 144, 146) is in contact with one side of a lower surface of the cap plate (160), and/or
wherein the first electrically conductive connection induction portion (143, 144, 146) comprises at least two electrically conductive connection induction portions arranged and spaced apart from each other along the circumference of the second current collector (140), and/or
wherein the first electrically conductive connection induction portion (143, 144, 146) protrudes from an upper surface of the extension portion (142, 145) of the second current collector (140) toward the cap plate (160).

9. The cylindrical secondary battery (100) as claimed in claim 8,
wherein the first electrically conductive connection induction portion (143) is an edge of the second current collector (140) protruding toward the cap plate (160), or
wherein the first electrically conductive connection induction portion (144) is between the second flat portion and the extension portion (142, 145) of the second current collector (140), and wherein the first electrically conductive connection induction portion (144) protrudes upward and gradually increased in width in a direction approaching the cap plate (160), or
wherein the first electrically conductive connection induction portion (146) has a bridge shape curved toward the cap plate (160), and wherein the first electrically conductive connection induction portion (143, 144, 146) is on the extension portion (142, 145) of the second current collector (140).

10. The cylindrical secondary battery (100) as claimed in any one of claims 7 to 9, wherein the second flat portion of the second current collector (140) gradually increases in width in a direction from a center of the second current collector (140) toward an edge of the second current collector (140).

11. The cylindrical secondary battery (100) as claimed in claim 5, wherein the electrically conductive connection induction portion comprises a second electrically conductive connection induction portion (165) on one side of the cap plate (160) protruding toward the second current collector (140), and
wherein the second electrically conductive connection induction portion (165) is in contact with one side of an upper surface of the second current collector (140), and/or
wherein the second electrically conductive connection induction portion (165) is on a lower surface of the connection area (163) of the cap plate (160), and/or
wherein the second electrically conductive connection induction portion (165) has a circular ring shape extending continuously on a lower surface of the cap plate (160) and along a circumference of the cap plate (160), and/or
wherein the second electrically conductive connection induction portion (165) comprises a plurality of protrusions, and wherein the plurality of protrusions is on a lower surface of the cap plate (160) and spaced apart from each other at regular intervals along a circumference of the cap plate (160).

12. The cylindrical secondary battery (100) as claimed in claim 5, wherein the electrically conductive connection induction portion comprises:
a first electrically conductive connection induction portion (143, 144, 146) on one side of the second current collector (140) protruding toward the cap plate (160); and
a second electrically conductive connection induction portion (165) formed on one side of the cap plate (160) protruding toward the second current collector (140), and
wherein the first electrically conductive connection induction portion (143, 144, 146) and the second electrically conductive connection induction portion (165) are in contact with each other.

13. The cylindrical secondary battery (100) as claimed in claim 12, wherein the first electrically conductive connection induction portion (143, 144, 146) comprises at least two electrically conductive connection induction portions arranged and spaced apart from each other along a circumference of the second current collector (140),
wherein the second electrically conductive connection induction portion (165) has a circular ring shape extending continuously on a lower surface of the cap plate (160) and extending along a circumference of the cap plate (160), and
wherein the first electrically conductive connection induction portion (143, 144, 146) is in contact with the second electrically conductive connection induction portion (165).

14. The cylindrical secondary battery (100) as claimed in claim 12, wherein the first electrically conductive connection induction portion (143, 144, 146) comprises at least two electrically conductive connection induction portions arranged and spaced apart from each other along a circumference of the second current collector (140),
wherein the second electrically conductive connection induction portion (165) comprises a plurality of protrusions, and wherein the plurality of protrusions is on a lower surface of the cap plate (160) and spaced apart from each other at regular intervals along a circumference of the cap plate (160), and
wherein one side of the first electrically conductive connection induction portion (143, 144, 146) and one side of the protrusion of the second electrically conductive connection induction portion (165) are in contact with each other.

15. The cylindrical secondary battery (100) as claimed in claim 14, wherein positions of the second electrically conductive connection induction portion (165) and the first electrically conductive connection induction portion (143, 144, 146) correspond to each other, and/or
wherein widths of the second electrically conductive connection induction portion (165) and the first electrically conductive connection induction portion (143, 144, 146) correspond to each other, or
wherein the second electrically conductive connection induction portion (165) and the first electrically conductive connection induction portion (143, 144, 146) are misaligned from each other.
